# EUROPEAN PATENT SPECIFICATION

(11) **EP 3 130 775 B1**
(45) Date of publication and mention of the grant of the patent: **06.11.2019**
(21) Application number: 15776539.7
(22) Date of filing: 25.02.2015
(51) Int. Cl.: F01N 3/20, F01N 3/26, F01N 3/28, B01D 53/94, B05B 5/00, B05B 1/24

(54) **PLASMA NOZZLE AND PLASMA SCR SYSTEM COMPRISING THE SAME**
PLASMADÜSE UND DIESE ENTHALTENDES PLASMA SCR-SYSTEM
BUSE À PLASMA ET SYSTÈME DE RÉDUCTION CATALYTIQUE SÉLECTIVE (SCR) À PLASMA COMPRENANT CELLE-CI

(30) Priority: 10.04.2014 KR 20140043254; 16.05.2014 KR 20140059250
(43) Date of publication of application: 15.02.2017
(73) Proprietor: Korea Institute Of Machinery & Materials, Yuseong-gu Daejeon 305-343 (KR)
(72) Inventor: PYUN, Sung Hyun, Daejeon 305-343 (KR); LEE, Dae-hoon, Daejeon 305-343 (KR); SONG, YoungHoon, Daejeon 305-343 (KR); KIM, Kwan-Tae, Daejeon 305-343 (KR)
(74) Representative: Delorme, Nicolas
(86) International application number: PCT/KR2015/001834
(87) International publication number: WO 2015/156500

(56) References cited:
- JP-A- 2010 038 090
- KR-A- 20110 117 770
- KR-B1- 100 638 639
- KR-B1- 100 638 639
- KR-B1- 100 866 327
- KR-B1- 100 866 329
- US-A1- 2003 143 445

## Description

### BACKGROUND OF THE INVENTION

### (a) Field of the Invention

The present invention relates to a plasma nozzle and a plasma SCR system including the same. More particularly, the present invention relates to a plasma nozzle for atomizing and thermal-decomposing a liquid to be quickly mixed and sprayed with a gas, and a plasma SCR system effectively removing nitrogen oxide (NOx) from a catalyst.

### (b) Description of the Related Art

A selective catalytic reduction (SCR) device is a device that selectively reduces only a nitrogen oxide (NOx) from exhaust gas of a diesel engine. To effectively reduce the nitrogen oxide, ammonia (NH₃) and the nitrogen oxide (NOx) are reacted at a ratio of 1:1 at a high temperature to be reduced to N₂.

To effectively generate ammonia, urea (a 32.5 % urea solution in DI water) is sprayed to the front of the SCR device. To improve a nitrogen oxide decomposition performance, the urea solution must be spatially and temporally quickly decomposed to ammonia, and the generated ammonia must be quickly mixed with the exhaust gas including the nitrogen oxide.

In a case of cars, since a space of an underbody is very limited, for the generation of the ammonia from the urea solution and the mixture of the ammonia and the exhaust gas, it is very advantageous to reduce a length and a temperature for a required pipe. Also, energy efficiency may be increased by reducing a thermal mass heated by the exhaust gas.

Document US 2003/0143445 A1 discloses a power system that has a fuel reformer, an emission abatement device and a fuel cell. The fuel reformer reforms hydrocarbon fuels so as to produce a reformate gas which is supplied to both the emission abatement device and the fuel cell. A method of operating a fuel reformer so as to generate and supply a reformate gas to both an emission abatement device and a fuel cell is also disclosed.

It is known from document KR 100 638 639 B1 to provide a plasma reactor for vaporizing and mixing a liquid fuel to overcome a limit of a conventional burner by playing a role of maintaining a stable evaporation performance regardless of a composition condition. In a plasma reactor for vaporizing and mixing of a liquid fuel, a nozzle is formed on a top side of a body. A gas supplying tube is formed to supply a gas from one side of the body to the inside of the body. A fuel supplying tube is formed so as to supply the fuel to the nozzle formed on the body. A high voltage electrode is formed on an inside of the body.

### SUMMARY OF THE INVENTION

The present invention provides a plasma nozzle atomizing and pyrolyzing a liquid supplied by generating plasma therein to be mixed and sprayed with a gas at a fast speed by heat due to a plasma arc and flow excited chemical species.

The present invention also provides a plasma SCR system that quickly mixes atomized and pyrolyzed ammonia and an exhaust gas.

According to one aspect of the present invention, a plasma nozzle including: a first housing discharging a supplied gas to a narrowed discharging port and being electrically grounded; a second housing provided near the discharging port of the first housing and spraying a liquid supplied through a spraying hole in the discharging port; and a driving electrode built in the first housing, forming a discharge gap along with the discharging port at an end part, and applied with a driving voltage is provided.

The first housing may include a cylinder part formed with a passage for a supplied gas, and an extending passage part extending on the end part of the cylinder part to be connected to the discharging port.

The cylinder part may further include a hub connected in a center direction of the cylinder part and supporting the driving electrode at the center, and the hub may support the driving electrode by interposing an insulating member.

The discharging port may have a predetermined length toward an end part of the second housing, and the spraying hole may be provided in plural along the length direction of the discharging port.

The extending passage part may be formed to be gradually decreased from the cylinder part to be obliquely connected to the discharging port, and the oblique passage set between the second housing may be directed toward the discharging port to be inclined.

The oblique passage may be formed to be inclined with a predetermined first angle θ1 from a diameter direction of the discharging port.

The spraying hole may be formed to be inclined with a predetermined second angle θ2 from the diameter direction of the discharging port.

The spraying hole may be provided in plural along a circumferential direction of the discharging port.

The extending passage part may be formed with the same diameter in the cylinder part to be connected to the discharging port in the diameter direction, and the passage set with the second housing may be directed toward the discharging port in the diameter direction.

The liquid supply line may be connected to the supply port of the second housing, and the liquid supply line may be installed with a flow control member enforcing and controlling the supply of the liquid.

The first housing may further include an oblique passage part formed to gradually decrease a maximum passage formed at the side where the gas is supplied and connected to the cylinder part.

A wall member closing and sealing one side of the first housing at the opposite side of the discharging port, supporting and insulating the driving electrode, and having a gas supply port supplying the gas may be further included.

The gas may be an exhaust gas or air of an engine, the liquid may be a urea solution or an ammonia solution, and the discharging port may atomize and pyrolyze the urea solution or the ammonia solution by the plasma arc jet to be mixed with the gas and to be sprayed.

According to another aspect of the present invention, a plasma SCR system includes: a discharge pipe distributing exhaust gas of an engine; an SCR device installed to the discharge pipe; and the plasma nozzle installed inside the discharge pipe in the front of the SCR device.

As described above, according to an exemplary embodiment of the present invention, since the plasma arc according to the plasma discharge is generated between the discharging port of the first housing and the driving electrode and the plasma arc emits heat near the discharging port, the gas is ejected to the discharging port with the rapid flow speed and in the excited state, and in this state, if the liquid is supplied to the discharging port through the spraying hole, the liquid is atomized and pyrolyzed with the rapid speed by the heat near the discharging port and the excited chemical species and is mixed with the gas to be sprayed.

If the urea solution or the ammonia solution as the liquid is supplied, the urea solution or the ammonia solution sprayed in the discharging port through the spraying hole is rapidly atomized and pyrolyzed by the heat in the discharging port due to the plasma arc and the rapid flow effect of the excited chemical species to be rapidly mixed and sprayed with the exhaust gas.

### BRIEF DESCRIPTION OF THE DRAWINGS

FIG. 1 is a perspective view of a plasma nozzle according to a first exemplary embodiment present invention.
FIG. 2 is a cross-sectional view taken along a line II-II of FIG. 1.
FIG. 3 is a cross-sectional view taken along a line III-III of FIG. 2.
FIG. 4 is a perspective view of a plasma nozzle according to a second exemplary embodiment present invention.
FIG. 5 is a perspective view of a plasma nozzle according to a third exemplary embodiment present invention.
FIG. 6 is a cross-sectional view taken along a line VI-VI of FIG. 5.
FIG. 7 is a cross-sectional view taken along a line VII-VII of FIG. 6.
FIG. 8 is a perspective view of a plasma nozzle according to a fourth exemplary embodiment present invention.
FIG. 9 is a schematic diagram of a plasma SCR system.

**- Description of Reference Numerals Indicating Primary Elements in the Drawings -**

| | |
|---|---|
| 1, 2, 3, 4: plasma nozzle | 10, 210, 310, 410: first housing |
| 11: oblique passage part | 12: cylinder part |
| 13, 213: extending passage part | 14: hub |
| 15: insulating member | 20, 220: second housing |
| 21: liquid supply line | 22: flow control member |
| 23: supply port | 30: driving electrode |
| 40: wall member | 42: compressor |
| 41: air supply port | 43: air supply line |
| 100: discharge pipe | 200: SCR device |
| D: diameter | G, G2: discharge gap |
| H1, H21: discharging port | H2, H22: spraying hole |
| L: length | θ1: first angle |
| θ2, θ22: second angle | E: engine |
| HV: driving voltage | |

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the invention as defined by the claim. The drawings and description are to be regarded as illustrative in nature and not restrictive. Like reference numerals designate like elements throughout the specification.

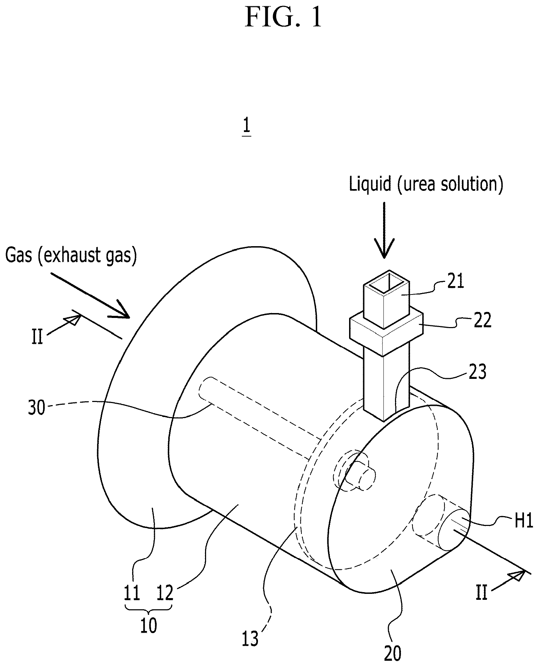

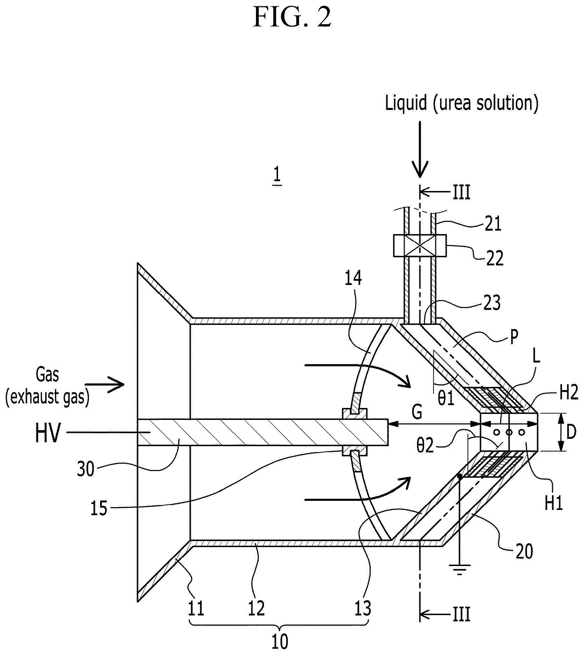

FIG. 1 is a perspective view of a plasma nozzle according to a first exemplary embodiment present invention, and FIG. 2 is a cross-sectional view taken along a line II-II of FIG. 1. Referring to FIG. 1 and FIG. 2, the plasma nozzle 1 according to the first exemplary embodiment includes a first housing 10, a second housing 20, and a driving electrode 30.

The first housing 10 provides a discharging port H1 narrowed at one side to discharge a gas (for example, an exhaust gas) supplied into one side. Also, the first housing 10 is extended on the opposite side of the discharging port H1 for facilitating the inflow of gas, thereby rapidly discharging the inflowed gas to the discharging port H1. The first housing 10 and the discharging port H1 are electrically grounded.

The second housing 20 is provided near the discharging port H1 of the first housing 10 such that the liquid supplied through the spraying hole H2 connected to the wall of the discharging port H1 is sprayed inside the discharging port H1. For example, the second housing 20 may be formed of an integral structure of a form resembling the first housing 10 toward the spray direction of the discharging port H1. Although not shown, the first housing 10 and the second housing 20 form a flange to be fastened with a bolt and a nut.

The driving electrode 30 is installed to be built in the center of the first housing 10 to form a discharge gap G between the end part thereof and the discharging port H1, such that the gas supplied to one side between the discharging port H1 and the driving electrode 30 acts as a discharge gas to generate a plasma discharge. For this purpose, the driving electrode 30 is applied with a driving voltage HV. The driving electrode 30 is disposed along the center of the first housing 10.

Next, the plasma nozzle 1 according to the first exemplary embodiment will be described in detail. The first housing 10 includes an oblique passage part 11, a cylinder part 12, and an extending passage part 13 sequentially formed along a gas flow direction.

The oblique passage part 11 forms a maximum passage at the side where the gas is supplied, and is formed of a structure that is gradually decreased along the flow direction of the gas. The cylinder part 12 is connected to the minimum passage of the oblique passage part 11 and forms a circular passage having a uniform diameter.

The extending passage part 13 is extended from the end part of the cylinder part 12 to be connected to the discharging port H1. For example, the extending passage part 13 is connected to the cylinder part 12 to be gradually decreased at the end part of the cylinder part 12, thereby being obliquely connected to the discharging port H1. The end part of the minimum passage of the extending passage part 13 is connected to the discharging port H1. That is, an end point of the extending passage part 13 becomes a starting point of the discharging port H1. The oblique passage P set between the extending passage part 13 and the second housing 20 is directed toward the discharging port H1 to be oblique.

Also, the cylinder part 12 further includes a hub 14 connected to the center direction inside the cylinder part 12 and supporting the driving electrode 30 at the center. The hub 14 supports the driving electrode 30 via an insulating member 15 interposed at the center while distributing the gas inflowed to the oblique passage part 11 of the first housing 10 to the cylinder part 12 and the extending passage part 13. That is, the driving electrode 30 is electrically insulated from the first housing 10.

The driving electrode 30 is connected to a power source from the outside of the first housing 10 to receive the driving voltage HV and forms the discharge gap G at the starting portion of the discharging port H1, that is, between the end part of the extending passage part 13 and the end part of the driving electrode 30. That is, the discharge gap G is set in the flow direction of the gas.

Substantially, the discharging port H1 is formed to be extended at the end of the extending passage part 13 of the first housing 10, and has the same diameter as the minimum passage of the extending passage part 13. That is, the discharging port H1 has a predetermined diameter D on the end of the first housing 10 and a predetermined length L toward the end part of the second housing 20.

The liquid (for example, a urea solution) supplied through the second housing 20 is sprayed inside the discharging port H1 through the spraying hole H2. The spraying hole H2 may be provided in plural along the length direction of the discharging port H1. Also, the spraying hole H2 is provided in plural along the circumferential direction of the discharging port H1.

That is, the spraying hole H2 is formed of one layer or a plurality of layers based on the discharging port H1 and is disposed in plural on each side, thereby forming a fine structure for spraying the liquid. For example, the discharging port H1 is set with a diameter of 0.1-3 mm, and the spraying hole H2 is set with a diameter of 0.0-0.5 mm.

Accordingly, the supplied liquid is sprayed through the plurality of spraying holes H2 disposed along the flow direction within the discharging port H1, and may be simultaneously sprayed on the center of the discharging port H1 in the circumferential direction of the discharging port H1. In this case, the supplied gas flows along the discharging port H1 to the first housing 10.

The size and the number of spraying holes H2 set the flow rate of the sprayed liquid. Also, the length L of the discharging port H1 sets the heat generated by the plasma arc of the gas, and the speed and the range for atomizing and pyrolyzing the liquid by the flow excited chemical species. Since the liquid is sprayed through the spraying hole H2 and the plasma arc is generated, the length L of the discharging port H1 required for atomizing and pyrolyzing the liquid may be shortened.

On the other hand, a liquid supply line 21 is connected to one side supply port 23 of the second housing 20. In the liquid supply line 21, since a flow control member 22 is installed, the supply of the liquid through the liquid supply line 21 is enforced and the flow rate of the supplied liquid may be also controlled.

The flow control member 22 may control the amount of the liquid supplied to the second housing 20, and may precisely control the liquid amount. Accordingly, the amount of the liquid that is introduced into the second housing 20 through the flow control member 22 may be minimized.

The flow control member 22 controls the opening of the passage in the liquid supply line 21 to control the supply amount of the liquid, and may be configured as a solenoid valve or an injector. Also, the size of the chamber set between the first housing 10 and the second housing 20 and the size of the spraying hole H2 may be variously set.

Meanwhile, the inner surfaces of the extending passage part 13 of the first housing 10 and the second housing 20 facing thereto form the oblique passage P of the structure that is narrowed along the discharge direction of the discharging port H1. For example, the oblique passage P formed between the extending passage part 13 and the second housing 20 is formed to be inclined with a predetermined first angle θ1 with respect to the diameter direction of the first housing 10.

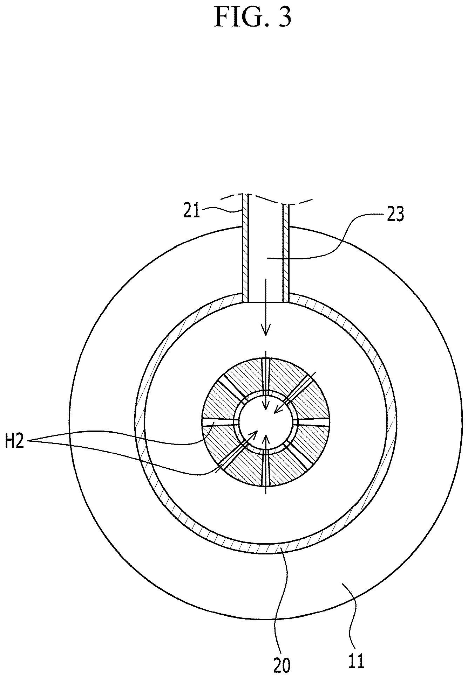

FIG. 3 is a cross-sectional view taken along a line III-III of FIG. 2. Referring to FIG. 3, the spraying hole H2 is directed toward the center of the discharging port H1 and is formed to be inclined with the predetermined second angle θ2 with respect to the diameter direction of the first housing 10, and the plurality of spraying holes H2 are connected into one on the periphery of the discharging port H1. The first angle θ1 and the second angle θ2 may be the same, or may be independent of each other.

That is, the spraying hole H2 is formed obliquely with the second angle θ2 in the oblique passage P between the extending passage part 13 and the second housing 20, thereby obliquely spraying the liquid with respect to the discharge direction of the discharging port H1. Accordingly, the gas flowing to the discharging port H1 is mixed with the liquid sprayed to the spraying hole H2, and may be further discharged to the discharging port H1 with a driving force by the liquid sprayed with the predetermined second angle θ2 through the spraying hole H2.

For example, the second angle θ2 of the spraying hole H2 may be set as a value between 0-90 degrees (excluding 90 degrees). Accordingly, the liquid discharged to the spraying hole H2 may be sprayed inside the discharging port H1 with the predetermined second angle θ2.

That is, in the plasma nozzle 1 of the first exemplary embodiment, while the liquid passes through the spraying hole H2, the liquid is atomized by an effect of the liquid (first fluid) nozzle and the liquid may be quickly and uniformly atomized by the flow effect of the gas (second fluid) generated while the gas passes through the discharging port H1.

Also, in the plasma nozzle 1, by the chemical effect of the gas molecules of the excited state according to the plasma discharge, the heat effect by the plasma arc of the plasma discharge, and the physical effect by the plasma arc jet, the liquid and the gas may be uniformly mixed and sprayed.

For example, when applying the plasma nozzle 1 to the urea solution spray system, the atomization of the urea solution and the fast mixture with the exhaust gas are possible, which could not be obtained from the conventional system. That is, in the short time and the short distance, the exhaust gas may inflow into the SCR (selective catalytic reduction) device in the state that it is uniformly mixed with the ammonia.

Accordingly, the size of the device to reduce the exhaust amount of the nitrogen oxide and the length of the flow path may be dramatically reduced, the installation space of the plasma nozzle 1 may be efficiency ensured, and the urea solution usage may be reduced.

If the exhaust gas or the external air is supplied to the first housing 10, the urea solution or the ammonia solution is supplied to the supply port 23 of the second housing 20 through the liquid supply line 21, and the driving electrode 30 is applied with the driving voltage HV in the state that the discharging port H1 and the first housing 10 are grounded, the atomized and pyrolyzed urea solution or ammonia solution is discharged through the discharging port H1.

Hereinafter, the case that the supplied liquid is the urea solution will be described, however the ammonia solution instead of the urea solution may be supplied.

On the other hand, when the air is supplied to the first housing 10, the oblique passage part of the first housing 10 may be removed. An exemplary embodiment related thereto will be described later.

The plasma arc jet generated between the driving electrode 30 and the discharging port H1 and discharged inside the discharging port H1 is possible using an AC or DC driving voltage. When using the DC power to generate the plasma arc jet, by the charged phenomenon of the atomized liquid droplets, coagulation of the liquid may be prevented and the liquid may be finer and more quickly atomized.

When using the AC power to generate the plasma arc jet, compared with the DC power, the lifespan of the driving electrode 30 is relatively elongated, and the plasma arc jet of a larger volume may be generated.

The diameter D of the discharging port H1 where the plasma arc jet is discharged is several millimeters (for example, 0.1-3 mm), and various sizes are applied from a diesel engine for large marine applications requiring the urea solution spray to medium and large cars, thereby being applied in various spray amounts of the urea solution.

A second exemplary embodiment of the present invention will now be described. The description for the same configurations compared with the first exemplary embodiment is omitted and differences will be described.

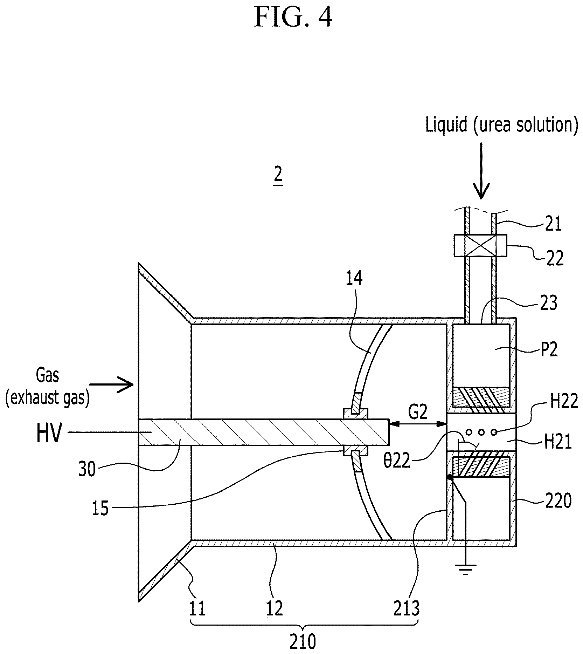

FIG. 4 is a cross-sectional view of a plasma nozzle according to a second exemplary embodiment of the present invention. Referring to FIG. 4, in the plasma nozzle 2 of the second exemplary embodiment, the inner surfaces of an extending passage part 213 of a first housing 210 and a second housing 220 facing thereto are formed of a structure that is perpendicular to the discharge direction of a discharging port H21.

For example, the passage P2 formed between the extending passage part 213 and the second housing 220 is formed in the diameter direction of the first housing 210. That is, in the second exemplary embodiment, the value corresponding to the first angle θ1 of the first exemplary embodiment is 0.

The spraying hole H22 is directed toward the center of the discharging port H21 and is formed to be inclined with respect to the diameter direction of the first housing 210 by the predetermined second angle θ22, and a plurality of spraying holes H22 are connected into one on the periphery of the discharging port H21.

That is, the spraying hole H22 is inclined with the second angle θ22 in the passage P2 between the extending passage part 213 and the second housing 220, thereby obliquely spraying the liquid with respect to the discharge direction of the discharging port H21.

Accordingly, the gas flowing to the discharging port H21 is mixed with the liquid sprayed to the spraying hole H22 and is discharged to the discharging port H21 with the driving force by the liquid sprayed at the predetermined second angle θ22 through the spraying hole H22.

The driving electrode 30 forms the discharge gap G2 between the end part thereof and the discharging port H21, thereby causing the gas supplied to one side between one side of the discharging port H21 and the driving electrode 30 as the discharge gas to generate the plasma discharge.

On the other hand, the gas supplied to one side of the plasma nozzle may be air, and when using the air as the discharge gas, an additional air compressor is required such that an additional cost may be generated, however by-products that may be generated when the chemical species (CO2, NOx, etc,) included in the exhaust gas are discharged may be reduced, and the flow speed of the discharge gas is increased, thereby the atomization of the liquid spray may be more effective.

Next, the plasma nozzle according to another exemplary embodiment of the present invention to supply the air to one side of the plasma nozzle will be described. However, in the following exemplary embodiment, the case that the air is supplied to one side of the plasma is only described, but it is not limited thereto, and the exhaust gas may be supplied like the first and second exemplary embodiments instead of the air. Further, in the following exemplary embodiment, only the case that the urea solution is supplied to the plasma nozzle as the liquid is described, however it is not limited thereto, and the described ammonia solution may be supplied instead of the urea solution.

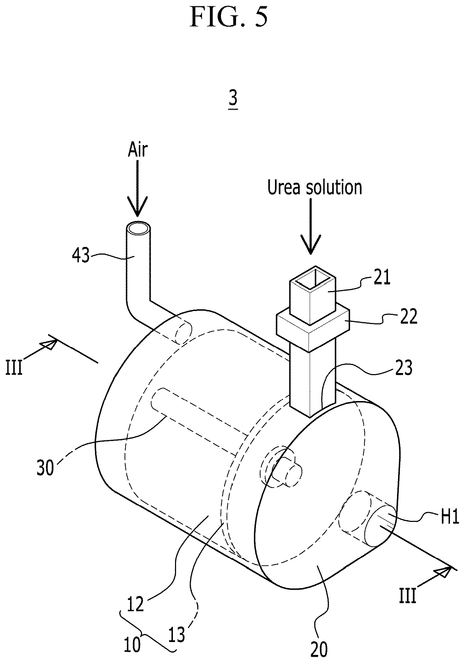

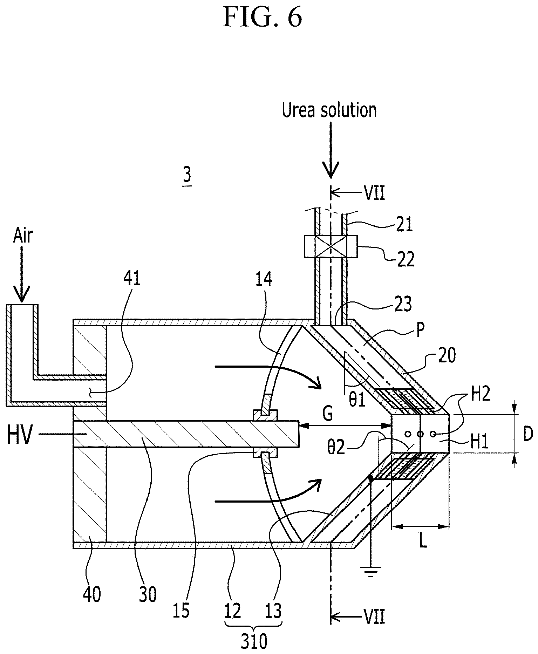

FIG. 5 is a perspective view of a plasma nozzle according to a third exemplary embodiment present invention, and FIG. 6 is a cross-sectional view taken along a line VI-VI of FIG. 5. Referring to FIG. 5 and FIG. 6, the plasma nozzle 3 includes a first housing 310, the second housing 20, the driving electrode 30, and a wall member 40.

The first housing 310 includes the discharging port H1 narrowed on one side to discharge the supplied compressed air with the rapid speed. Also, the first housing 310 is configured to receive the compressed air on the opposite side of the discharging port H1 and to rapidly discharge the compressed air to the discharging port H1. The first housing 310 and the discharging port H1 are electrically grounded.

The second housing 20 is provides near the discharging port H1 of the first housing 310 such that the urea solution supplied through the spraying hole H2 connected to penetrate the wall of the discharging port H1 is sprayed in the discharging port H1. For example, the second housing 20 may be formed of the integral structure of the form resembling the first housing 310 toward the spray direction of the discharging port H1.

The driving electrode 30 is installed to be built in the center of the first housing 310 to form the discharge gap G between the end part thereof and the discharging port H1, thereby causing the air as the discharge gas between the driving electrode 30 and one side of the discharging port H1 to generate the plasma discharge. For this purpose, the driving electrode 30 is applied with a driving voltage HV. The driving electrode 30 is disposed along the center of the first housing 10.

The wall member 40 closes and seals one side of the first housing 310 on the opposite side of the discharging port H1, and insulates and supports the driving electrode 30. The wall member 40 may be formed of an electrically insulating material having heat resistance that may withstand the high temperature of the exhaust gas. Also, the wall member 40 includes an air supply port 41 supplying the air. The air supply port 41 is connected to a compressor 42 supplying the compressed air with an air supply line 43.

That is, for the plasma nozzle 3 according to the third exemplary embodiment of the present invention, comparing with the plasma nozzle 1 (referring to FIG. 1 to FIG. 3) according to the first exemplary embodiment, one side of the first housing 10 is opened in the plasma nozzle 1 of the first exemplary embodiment, however one side of the first housing 310 is closed and sealed by the wall member 40 in the plasma nozzle 3 according to the third exemplary embodiment, and the wall member 40 includes the air supply port 41 to receive the compressed air from the outside.

Next, the plasma nozzle 3 will be described in detail. The first housing 310 includes the cylinder part 12 and the extending passage part 13 sequentially formed along the direction that the compressed air is supplied.

The cylinder part 12 forms the circular passage of the uniform diameter on the side of the air supply line 43 supplying the air, and is closed and sealed by the wall member 40 on the opposite side of the discharging port H1. Accordingly, the compressed air supplied to the air supply line 43 is discharged to the discharging port H1.

The extending passage part 13 extends to the end part of the cylinder part 12 to be connected to the discharging port H1. For example, the extending passage part 13 is connected to the cylinder part 12 to be gradually decreased at the end part of the cylinder part 12, thereby being obliquely connected to the discharging port H1.

In the extending passage part 13, the end part of the minimum passage is connected to the discharging port H1. That is, the end point of the extending passage part 13 becomes the starting point of the discharging port H1. The oblique passage P set between the extending passage part 13 and the second housing 20 is directed toward the discharging port H1 to be oblique.

Also, the cylinder part 12 further includes the hub 14 connected in the center direction inside the cylinder part 12 and supporting the driving electrode 30 at the center. The hub 14 supports the driving electrode 30 via an insulating member 15 interposed at the center while distributing the air supplied to the oblique air supply port 41 of the first housing 310 to the cylinder part 12 and the extending passage part 13. Accordingly, the driving electrode 30 is electrically connected to the driving voltage HV and is supported by the insulating member 15 and the wall member 40 to be electrically insulated from the first housing 310.

The driving electrode 30 is connected to the power source from the outside of the first housing 310 to receive the driving voltage HV and forms the discharge gap G at the starting portion of the discharging port H1, that is, between the end part of the extending passage part 13 and the end part of the driving electrode 30. That is, the discharge gap G is set in the flow direction of the air.

Substantially, the discharging port H1 is formed to be extended at the end of the extending passage part 13 of the first housing 310, and has a diameter of the same size as the minimum passage of the extending passage part 13. That is, the discharging port H1 has a predetermined diameter D at the end of the first housing 310 and a predetermined length L toward the end part of the second housing 20.

The urea solution supplied through the second housing 20 is sprayed to the inside of the discharging port H1 through the spraying hole H2. The spraying hole H2 may be provided in plural along the length direction of the discharging port H1. Also, the spraying hole H2 may be provided in plural along the circumferential direction of the discharging port H1.

That is, the spraying hole H2 is formed of one layer or a plurality of layers based on the discharging port H1 and is disposed in plural on each layer, thereby forming the fine structure spraying the urea solution. For example, the discharging port H1 is set at a diameter of 0.1-3 mm, and the spraying hole H2 is set at a diameter of 0.0-0.5 mm.

Accordingly, the supplied urea solution is sprayed through the plurality of spraying holes H2 disposed along the flow direction within the discharging port H1, and may be simultaneously sprayed at the center of the discharging port H1 in the circumferential direction of the discharging port H1. In this case, the supplied gas flows along the discharging port H1 to the first housing 310.

The size and the number of spraying holes H2 set the flow rate of the sprayed liquid. Also, the length L of the discharging port H1 sets the heat generated by the plasma arc of the gas, and the speed and the range for atomizing and pyrolyzing the urea solution by the flow excited chemical species. Since the urea solution is sprayed through the spraying hole H2 and the plasma arc is generated, the length L of the discharging port H1 required for atomizing and pyrolyzing the urea solution may be shortened.

On the other hand, the liquid supply line 21 is connected to one side supply port 23 of the second housing 20. In the urea solution supply line 21, since the flow control member 22 is installed, the supply of the liquid through the urea solution supply line 21 is enforced and the flow rate of the supplied liquid may also be controlled.

The flow control member 22 may control the amount of the urea solution supplied to the second housing 20, and may precisely control the urea solution amount. Accordingly, the amount of the urea solution that is introduced into the second housing 20 through the flow control member 22 may be minimized.

The flow control member 22 controls the opening of the passage in the urea solution supply line 21 to control the supply amount of the urea solution, and may be configured as the solenoid valve or the injector. Also, the size of the chamber set between the first housing 310 and the second housing 20 and the size of the spraying hole H2 may be variously set.

Meanwhile, the inner surfaces of the extending passage part 13 of the first housing 310 and the second housing 20 facing thereto form the oblique passage P of the structure that is narrowed along the discharge direction of the discharging port H1. For example, the oblique passage P formed between the extending passage part 13 and the second housing 20 is formed to be inclined with a predetermined first angle θ1 with respect to the diameter direction of the first housing 310.

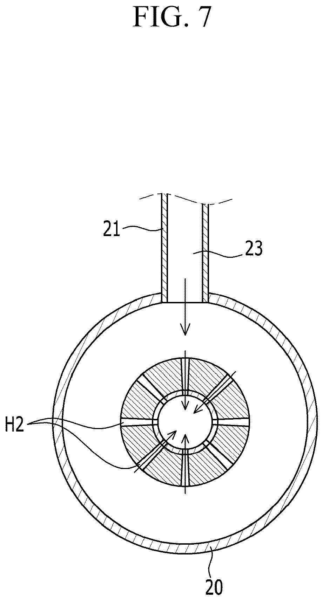

FIG. 7 is a cross-sectional view taken along a line VII-VII of FIG. 6. Referring to FIG. 7, the spraying hole H2 is directed toward the center of the discharging port H1 and is formed to be inclined with the predetermined second angle θ2 with respect to the diameter direction of the first housing 310, and the plurality of spraying holes H2 are connected into one on the periphery of the discharging port H1. The first angle θ1 and the second angle θ2 may be the same, or may be independent of each other.

That is, the spraying hole H2 is formed obliquely with the second angle θ2 in the oblique passage P between the extending passage part 13 and the second housing 20, thereby obliquely spraying the urea solution with respect to the discharge direction of the discharging port H1. Accordingly, the air flowing to the discharging port H1 is mixed with the urea solution sprayed to the spraying hole H2 and may be further discharged to the discharging port H1 with the driving force by the urea solution sprayed with the predetermined second angle θ2 through the spraying hole H2.

For example, the second angle θ2 of the spraying hole H2 may be set as the value between 0-90 degrees (excluding 90 degrees). Accordingly, the urea solution discharged to the spraying hole H2 may be sprayed inside the discharging port H1 at the predetermined second angle θ2.

That is, in the plasma nozzle 1 of the first exemplary embodiment, while the urea solution passes through the spraying hole H2, the liquid is atomized by an effect of the first fluid nozzle, and the urea solution may be quickly and uniformly atomized to the air by the flow effect of the second fluid generated while the air passes through the discharging port H1.

Further, in the plasma nozzle 3, by the chemical effect of the gas molecules in the excited state according to the plasma discharge, the heat effect of the plasma arc of the plasma discharge, and the physical effect of the plasma arc jet, the urea solution and the air may be uniformly mixed and sprayed.

If the air is supplied to the first housing 310, the urea solution is supplied to the supply port 23 of the second housing 20 through the urea solution supply line 21 and the driving electrode 30 is applied with the driving voltage HV in the state that the discharging port H1 and the first housing 310 are grounded, the atomized and pyrolyzed ammonia is discharged through the discharging port H1.

The plasma arc jet generated between the driving electrode 30 and the discharging port H1 and discharged inside the discharging port H1 may be produced by the AC or DC driving voltage. When using the DC power to generate the plasma arc jet, by the charged phenomenon of the atomized urea solution droplets, coagulation of the liquid may be prevented, and the urea solution may be finer and more quickly atomized.

When using the AC power to generate the plasma arc jet, compared with the DC power, the lifespan of the driving electrode 30 is relatively elongated, and the plasma arc jet of a larger volume may be generated.

The diameter D of the discharging port H1 where the plasma arc jet is discharged is several millimeters (for example, 0.1-3 mm), and various sizes are applied from a diesel engine for large marine applications requiring the urea solution spray to medium and large cars, thereby being applied in various spray amounts of the urea solution.

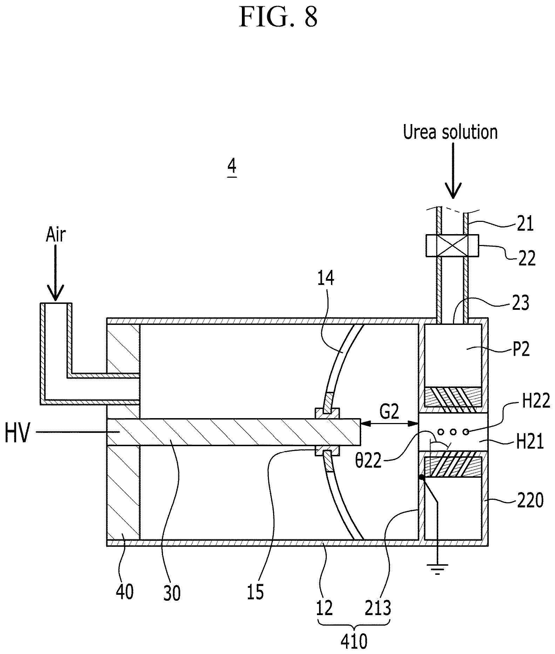

FIG. 8 is a cross-sectional view of a plasma nozzle according to a fourth exemplary embodiment of the present invention. Referring to FIG. 8, in the plasma nozzle 4 of the fourth exemplary embodiment, the inner surfaces of the extending passage part 213 of a first housing 410 and the second housing 220 facing thereto are formed of the structure that is perpendicular to the discharge direction of the discharging port H21.

The structure of the fourth exemplary embodiment may be similar to the structure of the described second exemplary embodiment.

For example, the passage P2 formed between the extending passage part 213 and the second housing 220 is formed in the diameter direction of the first housing 410. That is, in the fourth exemplary embodiment, the value corresponding to the first angle θ1 of the first exemplary embodiment is 0.

The spraying hole H22 is directed toward the center of the discharging port H21 and is formed to be inclined with respect to the diameter direction of the first housing 410 by the predetermined second angle θ22, and the plurality of spraying holes H22 are connected into one on the periphery of the discharging port H21.

That is, the spraying hole H22 is inclined with the second angle θ22 in the passage P2 between the extending passage part 213 and the second housing 220, thereby obliquely spraying the liquid with respect to the discharge direction of the discharging port H21.

Accordingly, the air flowing to the discharging port H21 is mixed with the urea solution sprayed to the spraying hole H22 and is discharged to the discharging port H21 with the driving force by the urea solution sprayed at the predetermined second angle θ22 through the spraying hole H22.

The driving electrode 30 forms the discharge gap G2 between the end part thereof and the discharging port H21, thereby causing the air supplied to one side between one side of the discharging port H21 and the driving electrode 30 as the discharge gas to generate the plasma discharge.

The plasma nozzle of the variously described exemplary embodiments may configure a plasma SCR system.

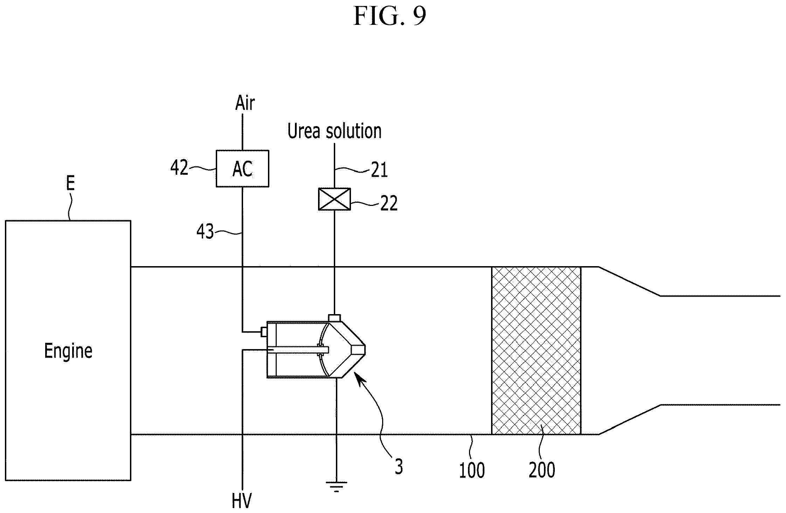

FIG. 9 is a schematic diagram of a plasma SCR system. Referring to FIG. 9, the plasma SCR system according to an exemplary embodiment includes a discharge pipe 100 connected to an engine E, a selective catalytic reduction device (hereinafter referred to as "SCR device") 200 installed to the discharge pipe 100, and a plasma nozzle 3.

In FIG. 9, the plasma SCR system includes the plasma nozzle 3 according to the third exemplary embodiment of the present invention, however it is not limited thereto, and the plasma nozzle according to the described another exemplary embodiment may also be included in the plasma SCR system. Hereinafter, the case that the plasma nozzle 3 of the third exemplary embodiment is included in the plasma SCR system is described as one example.

The engine E generates the exhaust gas including a nitrogen oxide (NOx) by using the diesel as a fuel. The nitrogen oxide contained in the exhaust gas passing through the discharge pipe 100 is decomposed into water and nitrogen by the action of the SCR device 200.

For effective decomposition of the nitrogen oxide included in the exhaust gas, the plasma nozzle 3 is installed inside the discharge pipe 100 at the front of the SCR device 200. The plasma nozzle 3 is configured to generate the plasma arc by using the air as the discharge gas, to pyrolyze the urea solution by using the plasma arc, and to spray the atomized and pyrolyzed ammonia at the front of the SCR device 200 to be mixed with the exhaust gas.

Further, the plasma nozzle 3 further generates hydrolysis in addition to the simple atomization in the urea solution spray process such that the ammonia may be directly generated in the spray process. Accordingly, the hydrolyzed ammonia is mixed with the nitrogen oxide along with the pyrolyzed ammonia such that the nitrogen oxide (NOx) may be further removed from the SCR device 200.

That is, the plasma SCR system of an exemplary embodiment may realize the rapid mixture of the atomized and pyrolyzed and exhaust gas in the urea solution, which could not be obtained from the conventional system. Accordingly, nitrogen oxide (NOx) may be effectively removed from the SCR device 200. That is, in the short time and with the short distance between the engine E and the SCR device 200, the exhaust gas in the state that it is uniformly mixed with the ammonia may flow into the SCR (selective catalytic reduction) device 200.

Accordingly, the size and the length of the discharge pipe 100 for the reduction of the exhaust amount of the nitrogen oxide may be remarkably reduced, the installation space of the plasma nozzle 3 may be efficiency obtained, and the urea solution use may be reduced.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A plasma nozzle (1, 2, 3, 4) comprising:
a first housing (10, 210, 310, 410) discharging a supplied gas to a narrowed discharging port (H1, H21) and electrically grounded;
a second housing (20, 220) provided near the discharging port (H1, H21) of the first housing (10, 210, 310, 410) and spraying a liquid supplied through a spraying hole (H2, H22) in the discharging port (H1, H21), and
a driving electrode (30) built in the first housing (10, 210, 310, 410), forming a discharge gap (G) along with the discharging port (H1, H21) at an end part, and configured for applying with a driving voltage (HV),
wherein the first housing (10, 210, 310, 410) includes a cylinder part (12) formed with a passage for a supplied gas, and an extending passage part (13, 213) extending on the end part of the cylinder part (12) to be connected to the discharging port (H1, H21),
the cylinder part (12) including a hub (14) connected in a center direction of the cylinder part (12),
wherein the hub (14) supports the driving electrode (30) at the center while distributing the gas inflowed into the cylinder part (12) to the extending passage part (13, 213) .

2. The plasma nozzle (1, 2, 3, 4) of claim 1, wherein the hub (14) included in the cylinder part (12) and connected in a center direction of the cylinder part (12) and supporting the driving electrode (30) at the center, supports the driving electrode (30) by interposing an insulating member (15).

3. The plasma nozzle (1, 2, 3, 4) of claim 1, wherein the discharging port (H1, H21) has a predetermined length toward an end part of the second housing (20, 220), and the spraying hole (H2, H22) is provided in plural along the length direction of the discharging port (H1, H21).

4. The plasma nozzle (1, 2, 3, 4) of claim 1, wherein the extending passage part (13, 213) is formed to be gradually decreased from the cylinder part (12) to be obliquely connected to the discharging port (H1, H21), and the oblique passage (P) set between the second housing (20, 220) is directed toward the discharging port (H1, H21) to be inclined.

5. The plasma nozzle (1, 2, 3, 4) of claim 4, wherein the oblique passage (P) is formed to be inclined with a predetermined first angle θ1 from a diameter direction of the discharging port (H1, H21).

6. The plasma nozzle (1, 2, 3, 4) of claim 4, wherein the spraying hole (H2, H22) is formed to be inclined with a predetermined second angle θ2 from the diameter direction of the discharging port (H1, H21).

7. The plasma nozzle (1, 2, 3, 4) of claim 1, wherein the spraying hole (H2, H22) is provided in plural along a circumferential direction of the discharging port (H1, H21).

8. The plasma nozzle (1, 2, 3, 4) of claim 1, wherein
the extending passage part (13, 213) is formed with the same diameter in the cylinder part (12) to be connected to the discharging port (H1, H21) in the diameter direction, and
the passage set with the second housing (20, 220) is directed toward the discharging port (H1, H21) in the diameter direction.

9. The plasma nozzle (1, 2, 3, 4) of claim 1, wherein
a liquid supply line (21) is connected to a supply port (23) of the second housing (20, 220), and
the liquid supply line (21) is installed with a flow control member (22) enforcing and controlling the supply of the liquid.

10. The plasma nozzle (1, 2, 3, 4) of claim 1, wherein
the first housing (10, 210, 310, 410) further includes an oblique passage part (11) formed to gradually decrease a maximum passage formed at the side where the gas is supplied and connected to the cylinder part (12).

11. The plasma nozzle (1, 2, 3, 4) of claim 1, further comprising a wall member (40) closing and sealing one side of the first housing (10, 210, 310, 410) at the opposite side of the discharging port (H1, H21), supporting and insulating the driving electrode (30), and having a gas supply port supplying the gas.

12. The plasma nozzle (1, 2, 3, 4) of claim 1, wherein
the gas is an exhaust gas or air of an engine, and
the liquid supplied through the spraying hole (H2, H22) is a urea solution or an ammonia solution, and
the discharging port (H1, H21) atomizes and pyrolyzes the urea solution or the ammonia solution by the plasma arc jet to be mixed with the gas and to be sprayed.

13. A plasma SCR system comprising:
a discharge pipe (100) distributing exhaust gas of an engine;
an SCR device (200) installed to the discharge pipe (100); and a plasma nozzle (1, 2, 3, 4) according to claim 12,
the plasma nozzle (1, 2, 3, 4) being installed inside the discharge pipe (100) in the front of the SCR device (200).

## Patentansprüche

1. Plasmadüse (1, 2, 3, 4), umfassend:
ein erstes Gehäuse (10, 210, 310, 410), welches ein zugeführtes Gas an eine verengte Abgabeöffnung (H1, H21) abgibt, und elektrisch geerdet;
ein zweites Gehäuse (20, 220), welches nahe der Abgabeöffnung (H1, H21) des ersten Gehäuses (10, 210, 310, 410) bereitgestellt ist und eine Flüssigkeit sprüht, die durch ein Sprühloch (H2, H22) in der Abgabeöffnung (H1, H21) zugeführt wird, und
eine Treiberelektrode (30), in dem ersten Gehäuse (10, 210, 310, 410) verbaut, welche zusammen mit der Abgabeöffnung (H1, H21) an einem Endstück einen Abgabespalt (G) bildet, und konfiguriert, um mit einer Treiberspannung (HV) angewandt zu werden,
wobei das erste Gehäuse (10, 210, 310, 410) ein Zylinderstück (12), das mit einem Durchlass für ein zugeführtes Gas gebildet wird, und ein erweitertes Durchlassstück (13, 213) einschließt, das sich an dem Endstück des Zylinderstücks (12), das an die Abgabeöffnung (H1, H21) anzuschließen ist, erstreckt,
wobei das Zylinderstück (12) eine Nabe (14) einschließt, die in einer Mittenrichtung des Zylinderstücks (12) angeschlossen ist,
wobei die Nabe (14) die Treiberelektrode (30) in der Mitte trägt, während sie das Gas, welches in das Zylinderstück (12) einströmt, zu dem erweiterten Durchlassstück (13, 213) verteilt.

2. Plasmadüse (1, 2, 3, 4) nach Anspruch 1, wobei die Nabe (14), welche in dem Zylinderstück (12) eingeschlossen ist, und in einer Mittenrichtung des Zylinderstücks (12) angeschlossen ist und die Treiberelektrode (30) in der Mitte trägt, die Treiberelektrode (30) durch Einfügen eines Isolierelements (15) trägt.

3. Plasmadüse (1, 2, 3, 4) nach Anspruch 1, wobei die Abgabeöffnung (H1, H21) eine vorbestimmte Länge in Richtung eines Endstücks des zweiten Gehäuses (20, 220) aufweist, und das Sprühloch (H2, H22) in einer Mehrzahl entlang der Längenrichtung der Abgabeöffnung (H1, H21) bereitgestellt ist.

4. Plasmadüse (1, 2, 3, 4) nach Anspruch 1, wobei das erweiterte Durchlassstück (13, 213) gebildet ist, um von dem Zylinderstück (12) schrittweise reduziert zu werden, um schräg an die Abgabeöffnung (H1, H21) angeschlossen zu werden, und der schräge Durchlass (P), der zwischen dem zweiten Gehäuse (20, 220) gesetzt ist, in Richtung der Abgabeöffnung (H1, H21) geleitet wird, um geneigt zu sein.

5. Plasmadüse (1, 2, 3, 4) nach Anspruch 4, wobei der schräge Durchlass (P) gebildet ist, um in einem vorbestimmten ersten Winkel *θ* 1 von einer Durchmesserrichtung der Abgabeöffnung (H1, H21) geneigt zu sein.

6. Plasmadüse (1, 2, 3, 4) nach Anspruch 4, wobei das Sprühloch (H2, H22) gebildet ist, um in einem vorbestimmten zweiten Winkel *θ* 2 von der Durchmesserrichtung der Abgabeöffnung (H1, H21) geneigt zu sein.

7. Plasmadüse (1, 2, 3, 4) nach Anspruch 1, wobei das Sprühloch (H2, H22) in einer Mehrzahl entlang einer Umfangsrichtung der Abgabeöffnung (H1, H21) bereitgestellt ist.

8. Plasmadüse (1, 2, 3, 4) nach Anspruch 1, wobei
das erweiterte Durchlassstück (13, 213) mit demselben Durchmesser in dem Zylinderstück (12) gebildet ist, um in der Durchmesserrichtung an die Abgabeöffnung (H1, H21) angeschlossen zu werden, und
der Durchlass, der mit dem zweiten Gehäuse (20, 220) gesetzt ist, in der Durchmesserrichtung in Richtung der Abgabeöffnung (H1, H21) gerichtet ist.

9. Plasmadüse (1, 2, 3, 4) nach Anspruch 1, wobei
die Flüssigkeitszuführungsleitung (21) an eine Zuführungsöffnung (23) des zweiten Gehäuses (20, 220) angeschlossen ist, und
die Flüssigkeitszuführungsleitung (21) mit einem Strömungssteuerelement (22) installiert ist, welches die Zuführung der Flüssigkeit vollzieht und steuert.

10. Plasmadüse (1, 2, 3, 4) nach Anspruch 1, wobei
das erste Gehäuse (10, 210, 310, 410) weiter ein schräges Durchlassstück (11) einschließt, welches gebildet ist, um einen maximalen Durchlass, der auf der Seite gebildet wird, wo das Gas zugeführt wird, und an dem Zylinderstück (12) angeschlossen ist, schrittweise zu reduzieren.

11. Plasmadüse (1, 2, 3, 4) nach Anspruch 1, weiter umfassend
ein Wandelement (40), welches eine Seite des ersten Gehäuses (10, 210, 310, 410) auf der der Abgabeöffnung (H1, H21) gegenüberliegenden Seite schließt und abdichtet, welches die Treiberelektrode (30) trägt und isoliert und eine Gaszuführungsöffnung aufweist, welche das Gas zuführt.

12. Plasmadüse (1, 2, 3, 4) nach Anspruch 1, wobei
das Gas ein Abgas oder Luft eines Motors ist, und
die Flüssigkeit, welche durch das Sprühloch (H2, H22) zugeführt wird, eine Harnstofflösung oder eine Ammoniaklösung ist, und
die Abgabeöffnung (H1, H21) die Harnstofflösung oder die Ammoniaklösung durch den Plasmabogenstrahl, welcher mit dem Gas zu mischen und zu sprühen ist, zerstäubt und pyrolisiert.

13. Plasma SCR-System, umfassend:
ein Abgaberohr (100), welches Abgas aus einem Motor verteilt;
eine SCR-Vorrichtung (200), welche in dem Abgaberohr (100) installiert ist; und
eine Plasmadüse (1, 2, 3, 4) nach Anspruch 12,
wobei die Plasmadüse (1, 2, 3, 4) innerhalb des Abgaberohres (100) vor der SCR-Vorrichtung (200) installiert ist.

## Revendications

1. Buse à plasma (1, 2, 3, 4) comprenant :
un premier boîtier (10, 210, 310, 410) évacuant un gaz fourni vers un orifice d'évacuation rétréci (H1, H21) et électriquement mis à la terre ;
un deuxième boîtier (20, 220) prévu à proximité de l'orifice d'évacuation (H1, H21) du premier boîtier (10, 210, 310, 410) et pulvérisant un liquide fourni à travers un trou de pulvérisation (H2, H22) dans l'orifice d'évacuation (H1, H21), et
une électrode d'attaque (30) intégrée dans le premier boîtier (10, 210, 310, 410), formant un espace d'évacuation (G) conjointement avec l'orifice d'évacuation (H1, H21) au niveau d'une partie d'extrémité, et configurée pour recevoir une tension d'attaque (HV),
dans laquelle le premier boîtier (10, 210, 310, 410) comporte une partie de cylindre (12) formée avec un passage pour un gaz fourni, et une partie de passage en extension (13, 213) s'étendant sur la partie d'extrémité de la partie de cylindre (12) pour être reliée à l'orifice d'évacuation (H1, H21),
la partie de cylindre (12) comportant un moyeu (14) relié dans une direction centrale de la partie de cylindre (12),
dans laquelle le moyeu (14) supporte l'électrode d'attaque (30) au centre tout en distribuant le gaz amené à s'écouler dans la partie de cylindre (12) à la partie de passage en extension (13, 213).

2. Buse à plasma (1, 2, 3, 4) de la revendication 1, dans laquelle le moyeu (14) inclus dans la partie de cylindre (12) et relié dans une direction centrale de la partie de cylindre (12) et supportant l'électrode d'attaque (30) au centre, supporte l'électrode d'attaque (30) en interposant un élément isolant (15).

3. Buse à plasma (1, 2, 3, 4) de la revendication 1, dans laquelle l'orifice d'évacuation (H1, H21) a une longueur prédéterminée vers une partie d'extrémité du deuxième boîtier (20, 220), et le trou de pulvérisation (H2, H22) est fourni en pluralité le long de la direction de la longueur de l'orifice d'évacuation (H1, H21).

4. Buse à plasma (1, 2, 3, 4) de la revendication 1, dans laquelle la partie de passage en extension (13, 213) est formée pour être progressivement diminuée par rapport à la partie de cylindre (12) pour être reliée de manière oblique à l'orifice d'évacuation (H1, H21), et le passage oblique (P) défini dans le deuxième boîtier (20, 220) est dirigé vers l'orifice d'évacuation (H1, H21) pour être incliné.

5. Buse à plasma (1, 2, 3, 4) de la revendication 4, dans laquelle le passage oblique (P) est formé pour être incliné selon un premier angle prédéterminé θ1 par rapport à une direction de diamètre de l'orifice d'évacuation (H1, H21).

6. Buse à plasma (1, 2, 3, 4) de la revendication 4, dans laquelle le trou de pulvérisation (H2, H22) est formé pour être incliné selon un deuxième angle prédéterminé θ2 par rapport à la direction de diamètre de l'orifice d'évacuation (H1, H21).

7. Buse à plasma (1, 2, 3, 4) de la revendication 1, dans laquelle le trou de pulvérisation (H2, H22) est prévu en pluralité le long d'une direction circonférentielle de l'orifice d'évacuation (H1, H21).

8. Buse à plasma (1, 2, 3, 4) de la revendication 1, dans laquelle
la partie de passage en extension (13, 213) est formée avec le même diamètre dans la partie de cylindre (12) pour être reliée à l'orifice d'évacuation (H1, H21) dans la direction de diamètre, et
le passage défini avec le deuxième boîtier (20, 220) est dirigé vers l'orifice d'évacuation (H1, H21) dans la direction de diamètre.

9. Buse à plasma (1, 2, 3, 4) de la revendication 1, dans laquelle
une conduite d'alimentation en liquide (21) est reliée à un orifice d'alimentation (23) du deuxième boîtier (20, 220), et
la conduite d'alimentation en liquide (21) est installée avec un élément de régulation d'écoulement (22) exécutant et régulant l'alimentation en liquide.

10. Buse à plasma (1, 2, 3, 4) de la revendication 1, dans laquelle
le premier boîtier (10, 210, 310, 410) comporte en outre une partie de passage oblique (11) formée pour diminuer progressivement un passage maximal formé au niveau du côté où le gaz est fourni et relié à la partie de cylindre (12).

11. Buse à plasma (1, 2, 3, 4) de la revendication 1, comprenant en outre
un élément de paroi (40) fermant et scellant un côté du premier boîtier (10, 210, 310, 410) au niveau du côté opposé de l'orifice d'évacuation (H1, H21), supportant et isolant l'électrode d'attaque (30), et ayant un orifice d'alimentation en gaz fournissant le gaz.

12. Buse à plasma (1, 2, 3, 4) de la revendication 1, dans laquelle
le gaz est un gaz d'échappement ou de l'air d'un moteur, et
le liquide fourni à travers l'orifice de pulvérisation (H2, H22) est une solution d'urée ou une solution d'ammoniac, et
l'orifice d'évacuation (H1, H21) atomise et pyrolyse la solution d'urée ou la solution d'ammoniac par le jet d'arc plasma pour être mélangée avec le gaz et pour être pulvérisée.

13. Système de réduction catalytique sélective (SCR) à plasma comprenant :
un tuyau d'évacuation (100) distribuant un gaz d'échappement d'un moteur ;
un dispositif SCR (200) installé sur le tuyau d'évacuation (100) ; et
une buse à plasma (1, 2, 3, 4) selon la revendication 12, la buse à plasma (1, 2, 3, 4) étant installée à l'intérieur du tuyau d'évacuation (100) à l'avant du dispositif SCR (200).
